# NEW EUROPEAN PATENT SPECIFICATION

(11) **EP 1 971 219 B2**
(45) Date of publication and mention of the opposition decision: **27.05.2020**
(45) Mention of the grant of the patent: 21.03.2018
(21) Application number: 06841240.2
(22) Date of filing: 22.12.2006
(51) Int. Cl.: A23J 3/34, A23J 3/30

(54) **PROCESS FLAVOURS WITH LOW ACRYLAMIDE**
REAKTIONSAROMEN MIT NIEDRIGEM ACRYLAMIDGEHALT
AROMES DE SYNTHESE A FAIBLE TENEUR EN ACRYLAMIDE

(30) Priority: 28.12.2005 EP 05113023; 28.12.2005 US 754219 P
(43) Date of publication of application: 24.09.2008
(60) Divisional application: 18155969.1
(73) Proprietor: DSM IP Assets B.V., 6411 TE Heerlen (NL)
(72) Inventor: KORTES, Jan Gerrit, NL-3833 HV Leusden (NL); NOORDAM, Bertus, NL-2692 DA's-Gravenzande (NL)
(74) Representative: DSM Intellectual Property
(86) International application number: PCT/EP2006/012648
(87) International publication number: WO 2007/073945

(56) References cited:
- WO-A-2004/026042
- WO-A1-02/32231
- WO-A1-2004/026043
- US-A- 4 165 391
- US-A- 4 879 130
- US-A1- 2005 214 411
- FRIEDMAN M: "Chemistry, biochemistry, and safety of acrylamide. A review" JOURNAL OF AGRICULTURAL AND FOOD CHEMISTRY, AMERICAN CHEMICAL SOCIETY. WASHINGTON, US, vol. 51, no. 16, 3 July 2003 (2003-07-03), pages 4504-4526, XP002276620 ISSN: 0021-8561
- WEISSHAAR R: "ACRYLAMID IN BACKWAREN - ERBEBNISSE VON MODELLVERSUCHEN" DEUTSCHE LEBENSMITTEL-RUNDSCHAU, STUTTGART, DE, vol. 100, no. 3, 2004, pages 92-97, XP009035526
- ZYZAK D V ET AL: "Acrylamide formation mechanism in heated foods" JOURNAL OF AGRICULTURAL AND FOOD CHEMISTRY, AMERICAN CHEMICAL SOCIETY. WASHINGTON, US, vol. 51, no. 16, 28 June 2003 (2003-06-28), pages 4782-4787, XP002276619 ISSN: 0021-8561
- HEE JEONG CHAE ET AL: "UTILIZATION OF BREWER'S YEAST CELLS FOR THE PRODUCTION OF FOOD-GRADE YEAST EXTRACT. PART 1: EFFECTS OF DIFFERENT ENZYMATIC TREATMENTS ON SOLID AND PROTEIN RECOVERY AND FLAVOR CHARACTERISTICS", BIORESOURCE TECHNOLOGY, ELSEVIER BV, GB, vol. 76, no. 3, 1 February 2001 (2001-02-01), pages 253-258, XP009049996, ISSN: 0960-8524, DOI: 10.1016/S0960-8524(00)00102-4
- M S Nawaz ET AL: "Purification and characterization of an amidase from an acrylamide-degrading Rhodococcus sp", Applied and Environmental Microbiology, 1 September 1994 (1994-09-01), pages 3343-3348, XP055213476, UNITED STATES Retrieved from the Internet: URL:http://aem.asm.org/content/60/9/3343.a bstract [retrieved on 2017-01-12]
- AASLYNG et al.: "Chemical and sensory characterization of hydrolyzed vegetable protein, a savory flavouring", J. Agric. Food Chem., vol. 46, 1998, pages 481-489,
- AASLYNG et al.: "Sensory, chemical and sensometric studies of hydrolyzed vegetable protein produced by various processes", Eur. Food Res. Technol., vol. 209, 1999, pages 227-236,
- "Plasmolysis" In: Nagodawithana: "Savoury Flavours textbook", 1995 pages 245-247,
- CHAE et al.: "UTILIZATION OF BREWER'S YEAST CELLS FOR THE PRODUCTION OF FOOD-GRADE YEAST EXTRACT. PART 1: EFFECTS OF DIFFERENT ENZYMATIC TREATMENTS ON SOLID AND PROTEIN RECOVERY AND FLAVOR CHARACTERISTICS", Bioresource Technology, vol. 76, 2001, pages 253-258,
- MANLEY et al.: "The development of process flavors", Trends Food Sci & Tech., vol. 6, 1995, pages 46-51,
- ASHURST: "Thermal process flavourings" In: "Food Flavourings", 1995 pages 276-308,
- RIHA et al.: "Formation of flavours during extrusion cooking", Food Reviews International, vol. 12, no. 3, 1996, pages 351-352,
- NAWAZ et al.: "Purification and characterization of an amidase from an acrylamide-degrading Rhodococcus sp", Appl. Environ. Microbiol., vol. 60, no. 9, 1994, pages 3343-3348,
- GOKMEN et al.: "Relation between the acrylamide formation and time-temperature history of surface and core regions of French fries", J. Food Eng., vol. 77, 2006, pages 972-976,

## Description

### Field of the invention

The present invention relates to a yeast extract, an autolysed yeast, to processes to produce them and to the use thereof in food or feed or in food or feed ingredients. The present invention also relates to a process flavour, to a process to produce it and to the use thereof in food or feed, or in food or feed ingredients.

### Background of the invention

The use of processed food and ready meals in our society is increasing every day. Often several types of flavourings, such as hydrolysed vegetable protein, yeast extracts, cheese, spices, etcetera are added to such a type of food during or after processing to render the food more palatable. It is known that the flavour of food is the result of a complex combination of different reaction pathways occurring during cooking. A problem that might be encountered in the production of processed food or ready meals is that the heating step in the production thereof may be not long enough in order to develop a satisfactory flavour. The flavour gap that may be encountered in processed food can however be filled by the addition to such food of process flavours (also called "reaction flavours"). Generally process flavours are added to processed food after the completion of the major processing steps.

The term "process flavour" is used throughout this specification for a composition having a distinct flavour, e.g. a meat flavour, which is obtainable by heating a mixture of ingredients comprising at least a compound containing nitrogen in the form of an amino group, and preferably at least a reducing carbohydrate, under conditions of pH, temperature, pressure and reaction time sufficient for a flavour to develop. The mixture of ingredients used in the production of process flavours may further comprise one or more lipids, sulphur-containing compounds, carbonyl-containing compounds, etcetera.

Process flavours are obtained by a complex combination of reaction pathways occurring between the ingredients during the heating step. An overview of several reaction pathways involved in the production of process flavours is for example given in "Savory Flavours", 1995, by T.W. Nagodawithana, Esteekay Associates Inc., Wisconsin, USA, pages 103-163.

In the process flavours which are produced according to this invention, the "at least a compound containing nitrogen in the form of an amino group" is obtainable from a source of amino acids selected from a yeast extract, an autolysed yeast, or a mixture of one or more of these ingredients, optionally in combination with one or more supplementary amino acids.

Acrylamide, which has been produced commercially for a long time for a variety of technical applications, is considered as probably carcinogenic for animals and humans. In 1991 the Scientific Committee on Food has investigated monomeric acrylamide in contact food materials and in its evaluation it was concluded that acrylamide is a genotoxic carcinogen.

Recently, the occurrence of acrylamide in a number of food and oven prepared foods was published (Tareke et al. Chem. Res. Toxicol. 13, 517-522. (2000)) and this resulted in world-wide concern. Further research revealed that considerable amounts of acrylamide are detectable in a variety of baked, fried and oven prepared common foods and it was demonstrated that the occurrence of acrylamide in food was the result of the baking process.

Friedman, "Chemistry, biochemistry, and safety of acrylamide, jour. of agr. chem", vol. 51, no 16, 3 July 2003 discloses a review of acrylamide and covers non-food and food sources: exposure from the environment and the diet; mechanisms of formation in food from asparagine and glucose; asparagine - asparaginase relationships; Maillard browning - acrylamide relationships; quenching of protein fluorescence, biological alkylation of amino acids, peptides, proteins and DNA by acrylamide and its epoxide metabolite glycidamide; risk assessment; neurotoxicity, reproductive toxicity and carcinogenicity; protein against adverse affects; and possible approaches to reducing levels in food.

Weisshaar, "Acrylamid in backwaren - erbebnisse fon modellversuchen", Deutsche Lebensmittel Rundschau, vol 100, no 3, 2004, p. 92-97 discloses that the formation of acrylamide in bakery products is limited by the amount of free asparagine in the raw materials. By treatment of flour with asparaginase, formation of acrylamide can be reduced.

Zyzak D.V. et al, "Acrylamide formation mechanism in heated foods" jour. of agr. and food chemistry, vol 51, no 16, 28 June 2003, presents a mechanism for the formation of acrylamide from the reaction of the amino acid asparagine and a carbonyl-containing compound at typical cooking temperatures.

US2005/214411 discloses methods for suppressing acrylamide formation and restoring browned color and flavor by exposing food material to a food grade microorganism in an amount effective to reduce acrylamide formation in a subsequent high temperature processing step.

WO2004/026042 discloses a process and apparatus for a method for reducing the amount of acrylamide in thermally processed foods, which permits the production of foods having significantly reduced levels of acrylamide.

Chae et al, "Utilization of brewer's yeast cells for the production of food grade yeast extract" Bioresource technology, vol 76, no 3, 1 February 2001, p. 253-258 discloses the production of yeast extract from brewer's yeast by combined enzymatic treatments using endoprotease, exoprotease, 5'-phosphodiesterase, and adenosine monophosphate (AMP)-deaminase.

US4879130 discloses the production of a flavouring agent by subjecting a source of free amino acids, additives including at least one reducing sugar and water to a process which produces a Maillard reaction. A mixture is kneaded and heated to plasticize it, propelled through an extrusion unit and extruded into a chamber under reduced pressure for drying and cooling the reacted product for providing the flavorant.

Nawaz et al "Purification and characterization of an amidase from an acrylamide-degrading Rhodococcus sp", app and env. Microbiology, 1 September 1994, p. 3343-3348 discloses that a constitutively expressed aliphatic amidase from a *Rhodococcus* sp. catalyzing acrylamide deamination was purified to electrophoretic homogeneity.

The presence of acrylamide in process flavours, which are subsequently used in several types of food, would be highly undesirable. Unexpectedly, the applicant has now found that unfortunately process flavours may comprise a considerable amount of acrylamide (which can be as high as e.g. 10000 ppb). The acrylamide in process flavours can be produced even at temperatures lower than 120°C, when no forming of acrylamide would be expected. The problem of the presence of acrylamide in process flavours had been unknown so far.

Yeast extracts, autolysed yeast and protein hydrolysates can advantageoulsy be used as a source of amino acids for the production of process flavours.

The applicant has now surprisingly found that when regular yeast extracts, regular autolysed yeasts or regular protein hydrolysates are used as a source of amino acids in the production of process flavours high level of acrylamide can be produced.

The present invention therefore also relates to novel yeast extracts and novel autolysed yeast suitable for the production of process flavours with low acrylamide. Furthermore, the present invention relates to novel process flavours with low acrylamide.

### Detailed description of the invention

The present invention relates, in a first aspect, to a yeast extract with an amount of free asparagine, based on dry matter, which is not higher than 1 mg/g, preferably not higher than 0.2 mg/g, more preferably not higher than 0.1 mg/g. The amount of free asparagine in the yeast extract according to the first aspect can be as low as ∼0 mg/g.

Yeast extract is defined as a composition comprising the water-soluble components extracted from yeast cells. In general, yeast extracts comprise amino acids, proteins, peptides, vitamins, carbohydrates and salts like phosphates. Yeast extracts may as well comprise 5'-ribonucleotides. Yeast extracts can for example be divided in autolytic and hydrolytic yeast extracts.

Autolytic yeast extracts are concentrates of the soluble materials which may be obtained from yeast after disruption of the cells and digestion (lysis) of the polymeric yeast material. The active yeast enzymes released in the medium after cell disruption contribute to the lysis. These types of yeast extract are rich in amino acids and generally do not comprise 5'-ribonucleotides because during the autolytic process the native RNA is decomposed or modified in a form which is not degradable into 5'-ribonucleotides. They are used in the food industry as basic taste providers. The amino acids present in the yeast extract add a bouillon-type brothy taste to the food.

Hydrolytic yeast extracts, are concentrates of the soluble materials and may be obtained from yeast after disruption of the cells, digestion (lysis) and addition of exogenous enzymes such as proteases and/or peptidases and especially nucleases, such as 5'-phosphodiesterase and optionally 5'-adenylic deaminase, to the yeast suspension during lysis. The native yeast enzymes are generally inactivated prior to the lysis. During this process, 5'-ribonucleotides of guanine (5'-guanine mono phosphate; 5'-GMP), uracil (5'-uracil mono phosphate; 5'-UMP), cytosine (5'-cytosine mono phosphate; 5'-CMP) and adenine (5'-adenine mono phosphate; 5'-AMP) may be formed. When adenylic deaminase is added to the mixture, 5'-AMP is transformed into 5'-inosine mono phosphate (5'-IMP). The hydrolytic yeast extracts obtained by this method are therefore rich in 5'-ribonucleotides, especially rich in 5'-GMP and 5'-IMP. Often yeast extracts are also rich in mono sodium glutamate (MSG). 5'-IMP, 5'-GMP and MSG are known for their flavour enhancing properties. They are capable of enhancing the savoury and delicious taste in certain types of food. This phenomenon is described as 'mouthfeel' or umami.

In one embodiment of the first aspect of the invention the yeast extract may be an autolytic or a hydrolytic yeast extract or a mixture thereof. The yeast extract may comprise 5'-ribonucleotides. With the term "5'-ribonucleotides" it is herewith intended to refer to a mixture of 5'-GMP, 5'-CMP, 5'-UMP and further 5'-AMP and/or 5'-IMP, wherein the 5'-IMP in the mixture is obtained by partial or complete conversion of 5'-AMP into 5'-IMP.

In a second aspect, the invention relates to an autolysed yeast with an amount of free asparagine, based on dry matter, which is not higher than 1 mg/g, preferably not higher than 0.2 mg/g, more preferably not higher than 0.1 mg/g. The amount of free asparagine in the autolysed yeast can be as low as ∼0 mg/g.

Autolysed yeast is a precursor of an autolytic yeast extract. It comprises concentrates of the soluble materials, which may be obtained from yeast after disruption of the cells and digestion (lysis) of the polymeric yeast material (wherein the active yeast enzymes released in the medium after cell disruption contribute to the lysis), and the insolubles formed during the lysis, mainly due to the degraded yeast cell wall fraction.

The yeast extract or autolysed yeast may be in any form, for example dissolved in a liquid or dried. Generally the yeast extract or autolysed yeast will be in a dry form, e.g. in a powder or granulated form.

In a fourth aspect, the invention relates to a method to produce a yeast extract of the first aspect or an autolysed yeast of the second aspect, the method comprising a treatment of a starting yeast extract or a starting autolysed yeast, all containing free asparagine, with an enzyme, with a physical method, with a chemical method or with a combination thereof capable of reducing the amount of free asparagine in the final product, and preferably in order to obtain an amount of free asparagine in the final product which is not higher than 1 mg/g, more preferably not higher than 0.2 mg/g, most preferably not higher than 0.1 mg/g, based on dry matter.

The starting yeast extract or starting autolysed yeast composition, all containing free asparagine, is also referred to as "starting product" throughout this specification. The starting product to be used in the method of the invention may be a commercially available product, may be an end product of a preparation process or may be an intermediate product obtained in a step of a preparation process for an end product. Therefore, in an embodiment of the invention, the treatment with an enzyme, with a physical method, with a chemical method or with a combination thereof is performed on an intermediate product containing free asparagine obtained in a step of a preparation process for yeast extract or autolysed yeast from yeast cells.

The starting product to be used in the method of the invention may be any starting product containing free asparagine as mentioned above. The starting product may be in any form, for example dissolved in a liquid or dried. Generally the starting product will be in a dry form, e.g. in a powder or granulated form.

In an embodiment of the method according to the fourth aspect of the invention, the treatment with an enzyme, with a physical method, with a chemical method or with a combination thereof capable of reducing the amount of free asparagine is performed on a starting product, preferably after suspension and/or solubilisation thereof in an appropriate solvent, wherein the starting product is a yeast extract or an autolysed yeast or either commercially available or being the end product of a preparation process. Generally the solvent may be such that it is suitable to allow the enzyme to react with free asparagine or that it is suitable to be used in the physical or chemical method. Generally the solvent may be a water-based solvent, more preferably the solvent is water.

In the context of the present invention "an enzyme, a physical method, a chemical method or a combination thereof capable of reducing the amount of free asparagine" is any enzyme or mixture of enzymes, any physical method or any chemical method or a combination thereof capable of removing part or all of the free asparagine and/or degrading free asparagine to a form which cannot lead to the formation of acrylamide when heated in the presence of a reducing sugar.

Physical methods which may be used in the treatment to reduce the amount of free asparagine are methods that remove part or all free asparagine from the starting product. Such methods may comprise e.g. the use of separation techniques such as chromatographic techniques. Chemical methods are methods that modify and/or degrade free asparagine to a form which cannot lead to the formation of acrylamide. Such methods may comprise e.g. the use of chemical reactions like oxidation, reduction, deamination.

In a preferred embodiment of the method of the fourth aspect of the invention, the treatment is performed with an enzyme capable of reducing the amount of free asparagine in the final product, under conditions of pH, temperature and reaction time sufficient for the enzyme to react with free asparagine.

Preferably the treatment with the enzyme is performed by using an enzyme capable of modifying the side chain of free asparagine, more preferably with an enzyme capable of hydrolysing the amide group in the side chain of free asparagine, even more preferably with the enzyme asparaginase (EC 3.5.1.1).

The enzyme or mixture of enzymes used in the preferred embodiment of the method of the third aspect of the invention may be added as an enzyme preparation. Asparaginase can be obtained from various sources, such as for example from plants, animals and microorganisms, such as a bacterium, a fungus or a yeast. Examples of suitable microorganisms are *Escherichia, Erwinia, Streptomyces, Pseudomonas, Aspergillus* and *Bacillus* species. An example of a suitable *Escherichia* strain is *Escherichia coli.* An example of a suitable *Erwinia* strain is *Erwinia chrysanthemi.* Examples of suitable *Streptomyces strains* are *Streptomyces lividans* or *Streptomyces murinus.* Examples of suitable Aspergillus strains are *Aspergillus oryzae, Aspergillus nidulans or Aspergillus niger.* Examples of suitable *Bacillus* strains are *Bacillus alkalophilus, Bacillus amyloliquefaciens, Bacillus brevis, Bacillus circulans, Bacillus coagulans, Bacillus lautus, Bacillus lentus, Bacillus licheniformis, Bacillus megateruim, Bacillus stearothemophilus, Bacillus subtilis* or *Bacillus thuringiensis.* An example of suitable methods to yield asparaginase from *Bacillus, Streptomyces, Escherichia* or *Pseudomonas* strains is described in WO03/083043. Preferably the asparaginase is derived from *Aspergillus niger* or *Bacillus subtilis,* more preferably from *Aspergillus niger.* A suitable asparginase from *Aspergillus niger* is described in WO2004/030468.

The enzyme capable of reducing the amount of free asparagine used in the preferred embodiment of the method of the fourth aspect of the invention will be used under conditions of pH, temperature and reaction time sufficient for the enzyme to react with free asparagine.

It is known that pH and temperature influence enzyme activity. Depending on the type of enzyme used the man skilled in the art will be able to determine the optimal conditions of pH and temperature under which the enzyme can react. Furthermore, such conditions are available via textbooks and/or provided by enzyme suppliers. The reaction time sufficient for the enzyme to react with free asparagine will depend, among others, from the amount and type of enzyme used and from the amount of conversion of asparagine desired in the final product. The man skilled in the art will be able to determine the optimal reaction time.

The amount of enzyme added to the starting product capable of reducing the amount of free asparagine will depend among others on the type of enzyme used and the enzyme activity. The appropriate amount to be added can be determined by those skilled in the art.

In a preferred embodiment of the method of the fourth aspect of the invention, the treatment with an enzyme, with a physical method, with a chemical method or with a combination thereof capable of reducing the amount of free asparagine, preferably with an enzyme capable of reducing the amount of free asparagine, is performed on an intermediate product containing free asparagine obtained in a step of a method for the production of a yeast extract or of an autolysed yeast from yeast cells.

In this case the method for the production of a yeast extract or of an autolysed yeast from yeast cells may start with yeast cells, e.g. with an aqueous suspension of yeast cells such as a fermentation broth of yeast cells. Any type of yeast can be used in the method of the invention. In particular, yeast strains belonging to the genera *Saccharomyces, Kluyveromyces* or *Candida* may be suitably used. Yeast strains belonging to the genus *Saccharomyces,* for example *Saccharomyces cerevisiae* are preferred.

Fermentation processes suitable to produce suspensions of yeast cells are known in the art. In some cases the fermentation broth can be concentrated before use in the method for the production of a yeast extract or of an autolysed yeast from yeast cells, for example by centrifugation or filtration. For example, cream yeast (Baker's yeast which has been concentrated to 15-27% w/w/ dry matter content) may be used.

In a preferred embodiment of the method of the fourth aspect of the invention the treatment with an enzyme, with a physical method, with a chemical method or with a combination thereof capable of reducing the amount of free asparagine is performed on an intermediate product containing free asparagine obtained in a step of a method for the production of a yeast extract or of an autolysed yeast from yeast cells, preferably during treating, more preferably after treating, the yeast cells in order to release and optionally at least partially degrade the cell contents. The cell walls are thereby (partially) damaged and/or disrupted resulting in release of the cell content and optionally the cell contents, such as proteins and/or RNA and/or polysaccharides, are at least partially degraded.

In order to release the cell contents from the cells and optionally at least partially degrade the cell contents, the cells may be treated chemically, mechanically, enzymatically or by a combination of two or more of these methods using methods known to those skilled in the art. Mechanical treatments include homogenisation techniques. At this purpose, use of high-pressure homogenisers is possible. Other homogenisation techniques may involve mixing with particles, e.g. sand and/or glass beads or using of milling apparatus (e.g. a bead mill). Chemical treatments include the use of salts, alkali and/or one or more surfactants or detergents. Chemical treatments may be in some cases less preferred because they may lead to partial degradation of RNA especially when alkali is used, with consequent formation of 2'-ribonucleotides and 3'-ribonucleotides.

Preferably, the cells are treated enzymatically, optionally after chemical and/or mechanical treatment. The enzymatic treatment may be performed by subjecting the yeast cells to the action of native yeast enzymes and/or added exogenous enzymes. The enzymatic treatment may be performed at a pH between 4 and 10 and/or at a temperature between 40°C and 70°C degrees depending on the type of enzyme(s) used. Generally the enzymatic treatment may be performed for a time comprised between 1 and 24 hours. The enzymatic treatment may not only release the cell contents by (partially) damaging and/or disrupting the cell walls but, depending on the enzymes involved, may also contribute to the degradation of the cell contents such as proteins, RNA and polysaccharides.

One or more exogenous enzymes can be added to the yeast cells to perform the enzymatic treatment. Preferably a protease, more preferably an endoprotease may be used as an exogenous enzyme. Optionally the one or more exogenous enzymes are added after the native yeast enzymes have been inactivated. Those skilled in the art know how to inactivate native yeast enzymes. Inactivation may for example be affected by a pH treatment or a heat shock, the latter method being preferred. A heat shock can be suitably performed by treating the yeast cells at a temperature of 80-97°C for 5 to 10 minutes. When an autolytic yeast extract or an autolysed yeast is to be produced with the method of the invention, the native yeast enzymes are generally not inactivated.

Optionally one or more enzymes used to transform RNA into 5'-ribonucleotides, such as 5'-phosphodiesterase (5'-Fdase) and optionally deaminase may also be added together with or subsequently to the treatment with the above-mentioned enzymes. 5'-Fdase is preferably used to convert RNA into 5'-ribonucleotides. 5'-Fdase can be obtained from a microbial or vegetable source (for example a malt root extract). An example of a commercially available microbial 5'-Fdase is Enzyme RP-1 produced by Amano (Japan). Optionally 5'-AMP is converted to 5'-IMP by deaminase, e.g. adenylic deaminase. As example of a commercially available deaminase is Deaminase 500 produced by Amano (Japan).

As mentioned above, in a preferred embodiment of the method of the fourth aspect of the invention, the treatment is performed on an intermediate product containing free asparagine obtained in a step of a method for the production of a yeast extract or of an autolysed yeast from yeast cells. Preferably, the treatment is performed during treating, more preferably after treating, the yeast cells in order to release and optionally at least partially degrade the cell contents. However, if a treatment is performed to transform RNA into 5'-ribonucleotides, the treatment with the enzyme capable of reducing the amount of free asparagine may be performed prior to or after RNA transformation. The treatment with the enzyme capable of reducing the amount of free asparagine, may be performed prior or after deactivation of the enzyme(s) and/or chemical(s) used to release and optionally at least partially degrade the cell contents from the yeast cells. Inactivation of the enzymes can be performed according to the methods mentioned above. The treatment with the enzyme capable of reducing the amount of free asparagine may require adjustment of the pH of the mixture in which the reaction will take place, depending on the pH at which the previous steps have been conducted and on the pH optimum of the enzyme used. After treatment the enzyme capable of reducing the amount of free asparagine is preferably inactivated using one of the methods mentioned above.

When a yeast extract is to be produced with the method of the fourth aspect, the insoluble fraction obtained after (partially) damaging and/or disrupting the yeast cell walls and optionally degrading the yeast cell contents may be removed after all enzymatic treatments have been completed, i.e. either after RNA degradation into 5'-ribonucleotides or treatment with the enzyme capable of hydrolysing the amide group in the side chain of free asparagine, depending on which step will be performed as last. The insoluble fraction can be separated from the supernatant by any common solid-liquid separation method, such as centrifugation or filtration. When an autolysed yeast is to be produced with the method of the third aspect, the removal of the insoluble fraction may be dispensed with.

The liquid fraction obtained after removing the solid fraction may be concentrated or dried. The liquid fraction may be concentrated to yield a yeast extract in liquid form (generally with a dry matter content of approximately 40-65% w/w) or further concentrated to yield a yeast extract in a form of a paste (generally with a dry matter content of approximately 70-80% w/w). The yeast extract can be dried to for example a dried powder with a dry matter content of approximately 95% w/w or higher. In case of production of autolysed yeast, the suspension comprising the liquid fraction and the insoluble fraction can be concentrated or dried according to similar methods as those described for yeast extracts.

In a fifth aspect, the invention provides the use of a yeast extract according to the first aspect of the invention or of a yeast extract obtainable by a method according to the fourth aspect of the invention in food, feed or in food or feed ingredients or in the preparation thereof.

In a sixth aspect, the invention provides with the use of an autolysed yeast according to the second aspect of the invention or of an autolysed yeast obtainable by a method according to the fourth aspect of the invention in food, feed or in food or feed ingredients or in the preparation thereof.

In a preferred embodiment of the use of the fifth or sixth aspect of the invention, the yeast extract or autolysed yeast is used in the production of a process flavour.

Surprisingly, when a yeast extract or autolysed yeast according to the invention is used in the production of a process flavour, a process flavour is obtained with a low amount of acrylamide, considerably lower than the amount present in a process flavour obtained using a regular yeast extract or autolysed yeast.

In an eighth aspect, the invention relates to a process flavour with an amount of acrylamide suitable for use in flavouring of food products or food ingredients, based on product dry matter, which is not higher than 800 ppb, preferably not higher than 600 ppb, more preferably not higher than 400 ppb, most preferably not higher than 200 ppb. Process flavour is herewith defined as indicated in the "Background of the invention". The process flavour is obtainable from a source of amino acids selected from a yeast extract, an autolysed yeast, or a mixture of one of more of these ingredients, optionally in combination with one or more supplementary amino acids. Advantageously, the process flavour of the invention comprises a low amount of the toxic component acrylamide. Preferably, the acrylamide is as low as 50 ppb, more preferably as low as 20 ppb, even more preferably as low as 10 ppb, and most preferably almost absent in the process flavour of the invention. This characteristic makes the process flavour of the invention particularly suitable for use in flavouring of food products or food ingredients.

In a ninth aspect, the invention relates to a method to produce a process flavour of the eighth aspect of the invention. The method comprises the step of subjecting a mixture containing at least a source of amino acids selected from a yeast extract, an autolysed yeast, , all containing an amount of free asparagine that is not higher than 1 mg/g, preferably not higher than 0.2 mg/g, more preferably not higher than 0.1 mg/g, or a mixture thereof, and preferably at least a reducing carbohydrate, to heating under conditions of pH, temperature, pressure and reaction time sufficient for a flavour to develop.

Very surprisingly, when the above-mentioned source of amino acids is used in the process of this aspect, the amount of acrylamide in the final product is considerably reduced as compared to the amount present in process flavours using regular sources of amino acids. The latter is particularly evident when the process flavour is produced by means of an extruder, as shown in the examples.

The amount of acrylamide in the final product is not higher than 800 ppb, preferably not higher than 600 ppb, more preferably not higher than 400 ppb, most preferably not higher than 200 ppb, based on dry matter.

In one embodiment, the method according to the ninth aspect of the invention starts with an initial mixture comprising a source of amino acids selected from a yeast extract, an autolysed yeast, , containing an amount of free asparagine that is not higher than 1 mg/g, preferably not higher than 0.2 mg/g, more preferably not higher than 0.1 mg/g, or a mixture thereof, optionally in combination with one or more supplementary amino acids.

Disclosed is that an initial mixture comprising a source of amino acids selected from a yeast extract, an autolysed yeast, , or a mixture thereof, that contains an amount of free asparagine that is higher than 1 mg/g, the mixture may for instance comprise commercially available yeast extract or autolysed yeast, before subjecting the mixture to conditions suitable for generating a process flavour as described below, the mixture first is subjected to a treatment with an enzyme, with a physical method, with a chemical method or with a combination thereof capable of reducing the amount of free asparagine, as described above, to decrease the amount of asparagine to a level that is lower than 1 mg/g. The step of reducing the amount of free asparagine may partially overlap with the step of generating the process flavours.

Preferably, the initial mixture as described in the above further comprises at least a reducing carbohydrate. The reducing carbohydrate may be a monosaccharide, a disaccharide, a polysaccharide or a mixture of one or more of these ingredients. Preferably the reducing carbohydrate is selected from the group of monosaccharides, preferably C5- or C6-monosaccharides, more preferably selected from the group of: L- or D-ribose, D-xylose, dextrose (D-glucose), L-arabinose, L-rhamnose, L-fructose. The present invention does not exclude the possibility of combining more than one reducing carbohydrate. In the latter case hydrolysates obtained from the chemical or enzymatic degradation of polysaccharides can also be used as source of reducing carbohydrates, such as maltodextrine. Preferably, the reducing carbohydrate is present in the mixture in an amount between 0 and 25% w/w, more preferably between 1 and 25% w/w, even more preferably between 2 and 25% w/w, based on dry matter of the mixture. When polysaccharides such as maltodextrine are present in the mixture, the amount of the reducing carbohydrate may vary from 5 to 50% w/w, preferably from 10 to 40% w/w, more preferably from 15 to 40% w/w, based on dry matter of the mixture.

The amount of the source of amino acids as specified in the background of the invention, may be of 30 to 98% w/w based on the dry matter of the total mixture when besides the source of amino acids, other ingredients are present in the initial mixture.

The mixture of ingredients used in the production of process flavours may further comprise one or more lipids such as oils or fats, sulphur-containing compounds, carbonyl-containing compounds, etcetera.

In case oils or fats are present in the mixture, they may be present in an amount of 0 to 5% w/w based on dry matter of the total mixture.

Preferably, the reaction mixture comprises a solvent, preferably water, generally the content of dry matter in the reaction mixture may be from 60 to 98 % w/w, more preferably from 75 to 95 % w/w based on the total mixture including the water.

The ingredients may be mixed according to any method know in the art, depending also on the amount of water present in the mixture. The ingredients may be added simultaneously or subsequently to the mixture. Mechanic mixers may also be used.

In the method of this aspect, the mixture comprising at least a source of amino acids as specified above or a mixture thereof, optionally in combination with one or more amino acids and preferably at least a reducing carbohydrate is heated under conditions of pH, temperature, pressure and reaction time sufficient for a flavour to develop.

To obtain a good flavour profile, the pH of the mixture in the method of the invention may be generally at least 2. Preferably the pH is between 4 and 8. more preferably between 5 and 7, even more preferably between 5.5 and 6. The pH may be adjusted using food acceptable acids or bases well within the knowledge of those skilled in the art.

Generally, in order to produce the process flavour, the reaction mixture may be heated at a temperature between 70 and 200°C, preferably between 70 and 190°C, depending also on the reaction time. Longer reaction times usually require a lower reaction temperature while shorter reaction times usually require a higher reaction temperature. The reaction time may vary between a few seconds (e.g. 2 seconds) and 6 hours, preferably between 10 seconds and 4 hours, more preferably between 20 seconds and 2 hours. To avoid loss of solvent during heating, the reaction mixture may be kept under reflux conditions.

Depending on the type of flavour that should be obtained and on the system used to produce the process flavour, the method of the ninth aspect may be performed at a pressure varying from reduced pressure (e.g. as low as 50 mbar, e.g. in a vacuum oven) to a pressure above atmospheric pressure, e.g. as high as 2-5 bars.

Optionally when the amount of water in the process flavour after the heating step is 4% w/w or higher, the method of the ninth aspect comprises a step in which the process flavour is dried. Methods known in the art, such as oven drying, belt drying, spray-drying may be used at this regard.

Depending on the type of flavour which one wishes to develop, different combinations of dry matter content of the mixture and/or temperature of the heating step and/or duration of the heating step and/or pressure using during the heating step may be used.

In order to e.g. produce process flavours with a roasted taste generally a mixture comprising approximately 80% w/w of dry matter based on the total mixture including water, may be hated above 100°C, e.g. at a temperature of 110-120°C, for a time of 4-6 hrs, at a reduced pressure, for example at 50 to 400 mbar.

In order to e.g. produce a process flavour with a cooked taste generally a mixture comprising a dry matter content, based on the total mixture including water, of 40 to 60% w/w may be heated at a temperature of approximately 100°C, for a time of approximately 1-2 hours.

In a preferred embodiment of the method of the ninth aspect of the invention, the ingredients of the mixture, comprising at least a source of amino acids as specified above and at least a reducing carbohydrate, are introduced into an extruder, the mixture is kneaded and heated under conditions of pH, temperature and reaction time sufficient for a flavour to develop and the reaction product is subsequently extruded from the extruder.

The extruder may be any type of extruder suitable for the production of process flavours such as a twin extruder. Extruders, e.g. twin extruders, are known to those skilled in the art. The ingredients may be introduced in the extruder through the same or separate feeders. When an extruder is used, preferably the mixture is kneaded and heated at a temperature of 110 to 190°C, preferably from 130 to 165°C. Preferably a pressure of 1 to 3 bar is used. The reaction time is preferably of 2 seconds to 30 minutes, more preferably from 10 seconds to 5 minutes. When an extruder is used, the amount of dry matter in the reaction mixture is preferably at least 90% w/w based on total weight of the mixture including water.

The reaction product may leave the extruder at a pressure, outside the extruder, varying from reduced pressure (e.g. 5 mbar) to atmospheric pressure (e.g. approximately 1 bar). The product extruded can be further cooled and/or dried using a cooling belt or any method suitable thereto.

If necessary, the method of the ninth aspect may further comprise a treatment aiming at further reducing the amount of acrylamide in the final process flavour. The treatment may be any treatment suitable to reduce the amount of acrylamide in the product and which may be applied in the production of process flavours.

In one embodiment, the conditions of pH, temperature, pressure and reaction time in the method of the ninth aspect are adjusted to reduce the amount of acrylamide in the process. For instance, the process flavour is dried under reduced pressure. The pressure may be generally comprised between 20-400 mbar.

In another embodiment the final product is treated with an enzyme capable of modifying or degrading acrylamide. The treatment is done under conditions of pH, temperature and reaction time sufficient for the enzyme to react with acrylamide. Preferably an amidase enzyme can be used. Examples of enzymes, which could be used, and of the conditions under which the enzymes could be used are given in the International Patent application filed on 13-10-2005, application number PCT/EP2005/055242.

The process flavour according to the eighth aspect of the invention or obtainable with the method according to the ninth aspect of the invention is very suitable, thanks to the very low level of acrylamide, to be used as flavouring in food or feed or food or feed ingredients.

### Examples

### Materials and methods

### Acrylamide measurement

### Sample pre-treatment

600 mg dried and homogenized sample is extracted using 5 ml of milliQ water. 1 µg of internal standard ¹³C₃ acrylamide in solution (CIL) is added to the extract. After 10 minutes of centrifugation (6000 rpm), 3 ml of the upper layer is brought on an Extreluut-3BT column (Merck). Using 15 ml of ethylacetate, acrylamide is eluted from the column. Ethylacetate is evaporated under a gentle stream of nitrogen down to approximately 0.5 ml.

### Chromatographic conditions

The ethylacetate solution is analysed using gas chromatography. Separation is obtained using a CP-Wax 57 (Varian) column (length 25 m, internal diameter 0.32 mm, film 1.2 µm) and helium as the carrier gas with a constant flow of 5.4 ml/min. Split-less injection of 3 µl is performed. Oven temperature is kept at 50°C for 1 minute, after which the temperature is increased with 30°C/min towards 220° C. After 12 minutes of constant temperature of 220°C the oven is cooled down and stabilized before next injection.

Detection is performed using on-line chemical ionization mass spectrometry in positive ion mode, using methane as ionization gas. The characteristic ions m/z 72 (acrylamide) and m/z 75 (¹³C₃ acrylamide) are monitored for quantification.

### Used Equipment

| | |
|---|---|
| GC: | HP6890 (Hewlet Packard) |
| MSD (mass selective detector): | HP5973 (Hewlet Packard) |

### Method to measure free amino acids

The following method was used for measuring the amount of free amino acids (e.g. in the yeast extract). A precisely weighed sample of the yeast extract material was dissolved in dilute acid and precipitates were removed by centrifugation in an Eppendorf centrifuge. Amino acid analysis was carried out on the clear supernatant according to the PicoTag method as specified in the operator's manual of the Amino Acid Analysis System of Waters (Milford MA, USA). To that end a suitable sample was obtained from the liquid, added to dilute acid and homogenized. From the latter solution a new sample was taken, dried and derivatised using phenylisothiocyanate. The various derivatised amino acids present were quantitated using HPLC methods and added up to calculate the total level of free amino acids in the weighed sample.

### Example 1

### Production of an autolytic yeast extract with low free asparagine

Enzyme unit definition: 1 µmole of NH₃ liberated from L-asparagine per minute at pH 5.5 and 37 °C.

200 l of a 20 % solution of an autolytic yeast extract (Gistex® LS, DSM Food Specialties-The Netherlands) was made in water. The pH of this solution was adjusted to 5.1 using 4 N KOH. 20 ml of Asparaginase solution (the solution contained 4602 enzyme units/ml) was added to the yeast extract solution and the mixture was incubated for 4 hours at 51 °C. Once the reaction was terminated the enzyme was inactivated by heat treatment. The resulting solution was spray dried, after the pH was adjusted to pH 6.5. The final product contained an amount of water lower than 3.5% w/w. The amino acid composition of the mixture was measured at the start end after the enzyme treatment as indicated above. The results are listed in table 1.

The asparaginase used was the *Aspergillus niger* asparaginase described in WO2004/030468.

The results in table 1 clearly demonstrate that the yeast extract after Asparaginase treatment is free of asparagine. In addition, the amount of aspartic acid has increased with an amount similar to that of the reduction of asparagine.

**Table 1: The effect of Asparaginase treatment on an autolytic yeast extract.**

| | **Free Amino acid composition before Asparaginase treatment** | **Free Amino acid composition after Asparaginase treatment** |
|---|---|---|
| | Free AA* | Free AA* |
| Aspartic acid | 14.9 | 22.0 |
| Glutamic acid | 61.7 | 58.7 |
| Asparagine | 7.2 | 0.0 |
| Glutamine | 0.0 | 0.0 |
| Serine | 10.7 | 10.3 |
| Glycine | 4.4 | 4.4 |
| Histidine | 2.6 | 2.6 |
| Arginine | 5.2 | 5.1 |
| Threonine | 9.7 | 9.4 |
| Alanine | 30.3 | 29.6 |
| Proline | 6.9 | 6.8 |
| Tyrosine | 12.4 | 12.1 |
| Valine | 19.0 | 18.7 |
| Methionine | 6.5 | 6.3 |
| Isoleucine | 14.9 | 14.4 |
| Leucine | 26.5 | 26.0 |
| Phenylalanine | 14.8 | 14.0 |
| Lysine | 7.8 | 7.6 |
| Total | 255.5 | 248.0 |

| | | |
|---|---|---|
| * mg per gram dry matter of yeast extract. | | |

### Example 2

### Preparation of process flavours using an oven with different temperatures during heating step

### Formulation 2a

81.3 g Gistex® LS powder (DSM Food Specialties-The Netherlands)
16.0 gram Maxarome® Plus HS powder (DSM Food Specialties-The Netherlands) 24.3 g gram of dextrose monohydrate

### Formulation 2b

81.3 g yeast extract obtained in example 1, powder
16.0 gram Maxarome® Plus HS powder (DSM Food Specialties-The Netherlands) 24.3 g gram of dextrose monohydrate.

Gistex LS powder is an autolytic yeast extract comprising less than 1% w/w sodium chloride, an amount of protein of 62 % w/w and an amount of free amino acids of 40-50% w/w of the total protein, all weight percentages based on dry matter.

Maxarome Plus HS powder is a hydrolytic yeast extract comprising ∼40% w/w sodium chloride based on dry matter. Furthermore it comprises approximately 3% w/w each of 5'-GMP and 5'-IMP (measured as disodium heptahydrate salt), 5% w/w of glutamic acid (measured as free acid), 72% w/w of protein and an amount of free amino acids which is ∼20% w/w of the total protein, al weight percentages based on sodium chloride free yeast extract dry matter.

In both cases, powders were stirred with a spoon. Drop wise, 3.4 gram of sunflower oil were dropped under stirring, into the powder mix.

Powder mixes were divided into aluminum trays.

Powders were heated in the oven for a fixed period of time at different temperatures. The powders obtained had a roasted beef flavour.

The powders were analyzed for presence of acrylamide. The results are reported in Table 2.

**Table 2**

| Experiment conditions | Acrylamide (µg/kg) |
|---|---|
| Powder mix, Formulation 2a, 165°C, 40 minutes | 935 |
| Powder mix, Formulation 2a, 180°C, 40 minutes | 1497 |
| Powder mix, Formulation 2b, 165°C, 40 minutes | 255 |
| Powder mix, Formulation 2b, 180°C, 40 minutes | 296 |

### Example 3

### Preparation of process flavours using a batch kneader

30 gram of samples of the formulations 3, 3a, (see Table 3 for compositions thereof) were transferred into a 50 cc batch kneader, which was preheated to a specific temperature and were mixed for 180 seconds at the same temperatures.

Temperature used for formulation 3, 3a: 145 and 150°C.

**Table 3**

| **Ingredients** | **Formul. 3** | **Formul. 3a** |
|---|---|---|
| Gistex® LS pwdr | 82.5 g | - |
| Dextrose.H₂O | 29.0 g | 29.0 g |
| Sunflower oil | 1.5 g | 1.5 g |
| Yeast extract ex. 1 | - | 82.5 g |
| Glycine | 2.3 g | 2.3 g |
| Maltodextrine | 9.7 g | 9.7 g |

The process flavours obtained had a roast chicken taste.

The resulting process flavours were analysed for the acrylamide content. Results were reported in Table 4.

**Table 4**

| **Formulation** | **Temperature (°C)** | **Acrylamide (ppb)** |
|---|---|---|
| 3 | 145 | 5928 |
| 3a | 145 | 143 |
| 3 | 150 | 6227 |
| 3a | 150 | 124 |

### Example 4

### Preparation of process flavours using a an extruder

### Description of the process:

To a twin-screw extruder, equipped with a dosing unit and injector for water and a dosing unit and injector for oil, a mixture of sugars and yeast extract are added using separate feeders. Two different formulations (formulation 4 and 4a, see Table 4) were used. 8 kilograms of each formulation were processed in the extruder during one hour at 165°C.

The product was extruded out of the extruder in a room under atmospheric pressure and was cooled and dried on a cooling belt equipped with a pressure roll, grind and sampled.

**Table 4**

| **Ingredient** | **Formulation 4 (% w/w on dry matter)** | **Formulation 4a (% w/w on dry matter)** |
|---|---|---|
| Gistex® LS powder | 65.0 | |
| Yeast extract ex. 1, powder | | 65.0 |
| Maxarome® Plus powder | 12.8 | 12.8 |
| Dextrose monohydrate | 19.4 | 19.4 |
| Demineralised water | 5.0 | 5.0 |
| Sunflower oil | 2.7 | 2.7 |

The products obtained had a dark roast beef taste. Samples were analyzed on acryl amide.

### Results:

Formulation 4: 4568 ppb.
Formulation 4a: 400 ppb.

### Example 5

### Production of a casein hydrolysate, low in free asparagin

Enzyme unit definition: 1 µmole of NH₃ liberated from L-asparagine per minute at pH 5.5 and 37 °C.

1 l of a 10 % solution of casein hydrolysate in water was made. The pH of this solution was adjusted to 5.1. 62 mg of Asparaginase (having 14772 units/mg) was added to the casein solution and the mixture was incubated for 2 hours at 51 °C. Once the reaction was terminated the enzyme was inactivated by heat treatment. The resulting solution was freeze dried. The amino acid composition of the mixture was measured at the start and after the enzyme treatment as indicated above. The results are listed in table 6.

**Table 6: the effect of Asparaginase treatment on a casein hydrolysate.**

| | **Free Amino acid composition before Asparaginase treatment** | **Free Amino acid composition after Asparaginase treatment** |
|---|---|---|
| | Free AA* | Free AA* |
| Aspartic acid | 1.47 | 4.23 |
| Glutamic acid | 7.81 | 7.63 |
| Asparagine | 2.07 | < 0.01 |
| Glutamine | 6.99 | 7.92 |
| Serine | 3.18 | 3.04 |
| Glycine | 0.54 | 0.53 |
| Histidine | 6.79 | 7.12 |
| Arginine | 6.35 | 6.68 |
| Threonine | 4.82 | 5.85 |
| Alanine | 2.53 | 2.66 |
| Proline | 7.97 | 8.00 |
| Tyrosine | 12.31 | 13.37 |
| Valine | 11.08 | 11.37 |
| Methionine | 10.07 | 9.44 |
| Isoleucine | 6.11 | 6.01 |
| Leucine | 32.05 | 30.37 |
| Phenylalanine | 14.78 | 14.29 |
| Lysine | 13.94 | 15.15 |
| Total | 150.86 | 153.66 |

| | | |
|---|---|---|
| * mg per gram dry matter of casein hydrolysate. | | |

The asparaginase used was the *Aspergillus niger* asparaginase described in WO2004/030468.

### Example 6

### Production of a process flavour, based on casein hydrolysate

A mixture was prepared consisting of 4.7 g of glucose, 0.4 g of glycine, 1.6 g of maltodextrin and13.4 g of casein hydrolysate, as prepared in example 5 (asparagine free). As reference a similar mixture was prepared using the non-asparaginase treated casein hydrolysate instead of the casein hydrolysate of example 5.

Both mixtures were oven treated for 45 minutes at 155 °C. Finally, the acryl amide content was measured using the method, described in the section materials and methods.

The result of the acryl amide analysis is listed in table 7.

**Table 7**

| Casein hydrolysate | Acryl amide (ppb) |
|---|---|
| Asparaginase treated Casein hydrolysate | 614 |
| Non-treated casein hydrolysate | 2801 |

### Example 7

### Production of an autolysed yeast, low in free asparagine

2 l of cream yeast of Saccharomyces cerevisiae of 18.5 % dry solids was autolysed at 51 °C for 24 hours at pH 5.1 in the presence of 2 grams of the endoprotease Alcalase® (Novozymes-Denmark). Next, the reaction mixture was heat treated to inactivate all enzyme activity.

1 l of the reaction mixture was further incubated for 2 hours at pH 5.1 and 51 °C in the presence of 53 mg of Asparaginase (having 14772 units/mg). Next, the enzyme was inactivated by heat treatment. The resulting solution was spray dried. A reference sample (not treated with asparaginase) was also spray dried. The amino acid composition of the dried materials (with and without treatment with asparaginase) was measured. The results are listed in table 8.

**Table 8: the effect of Asparaginase treatment on an autolysed yeast.**

| | **Free Amino acid composition before Asparaginase treatment** | **Free Amino acid composition after Asparaginase treatment** |
|---|---|---|
| | Free AA* | Free AA* |
| Aspartic acid | 14.1 | 19.2 |
| Glutamic acid | 38.3 | 38.8 |
| Asparagine | 4.5 | < 0.01 |
| Glutamine | 5.6 | 5.6 |
| Serine | 4.1 | 3.7 |
| Glycine | 2.9 | 3.1 |
| Histidine | 1.3 | 1.5 |
| Arginine | 4.3 | 4.5 |
| Threonine | 5.9 | 6.0 |
| Alanine | 20.1 | 20.4 |
| Proline | 5.8 | 5.7 |
| Tyrosine | 7.0 | 7.3 |
| Valine | 11.1 | 11.4 |
| Methionine | 2.9 | 2.7 |
| Isoleucine | 9.4 | 9.4 |
| Leucine | 16.1 | 16.2 |
| Phenylalanine | 8.8 | 9.2 |
| Lysine | 5.0 | 5.3 |
| Total | 167.2 | 170.0 |

| | | |
|---|---|---|
| * mg per gram dry matter of autolysed yeast. | | |

The asparaginase used was the *Aspergillus niger* asparaginase described in WO2004/030468.

### Example 8

### Production of a process flavour, based on autolysed yeast

A mixture was prepared consisting of 4.7 g of glucose, 0.4 g of glycine, 1.6 g of maltodextrin and 13.4 g of autolysed yeast, as prepared in example 7 (asparagine free). As reference a similar mixture was prepared using the untreated autolysed yeast.

Both mixtures were oven treated for 45 minutes at 155 °C. Finally, the acryl amide content was measured using the method, described in the section materials and methods.

The result of the acryl amide analysis is listed in table 9.

**Table 9**

| Autolysed yeast | Acryl amide (ppb) |
|---|---|
| Asparagine treated autolysed yeast | 710 |
| Non-treated autolysed yeast | 2551 |

### Example 9

### Production of a yeast extract, low in free asparagin

2 l of cream yeast of Saccharomyces cerevisiae of 18.2 % dry solids was autolysed at 51 °C for 17.5 hours hours at pH 5.1 in the presence of 2 grams of the endoprotease Alcalase® (Novozymes-Denmark). The reaction mixture was further incubated for 2 hours at pH 5.1 and 51 °C in the presence of 613 mg of Asparaginase (having 1802 units/mg). The cell walls were removed by centrifugation and the supernatant was heat treated for 5 minutes at 95 °C to inactivate all present enzyme activity. Next, supernatant was concentrated and spray dried.

Asparagine concentrations were measured in the reaction mixture before and after Asparaginase treatment and in the final extract powder. The results are listed in table 10.

**Table 10: asparagine analysis results**

| **Sample** | **Asparagine concentration (mg/g dry matter)** |
|---|---|
| Before Asparaginase treatment | 3.29 |
| After Asparaginase treatment | < 0.01 |
| Yeast extract powder | < 0.03 |

The asparaginase used was the *Aspergillus niger* asparaginase described in WO2004/030468.

## Claims

1. Yeast extract with an amount of free asparagine, based on dry matter, which is not higher than 1 mg/g, preferably not higher than 0.2 mg/g, more preferably not higher than 0.1 mg/g.

2. Autolysed yeast with an amount of free asparagine, based on dry matter, which is not higher than 1 mg/g, preferably not higher than 0.2 mg/g, more preferably not higher than 0.1 mg/g.

3. Method to produce the yeast extract of claim 1 or the autolysed yeast of claim 2 comprising treatment of a starting yeast extract or a starting autolysed yeast containing free asparagine with an enzyme, with a physical method that removes part or all free asparagine from the starting product, with a chemical method that modifies and/or degrades free asparagine to a form which cannot lead to the formation of acrylamide, or with a combination thereof capable of reducing the amount of free asparagine in the yeast extract or autolysed yeast, to obtain an amount of free asparagine in the yeast extract or autolysed yeast which is not higher than 1 mg/g, more preferably not higher than 0.2 mg/g, most preferably not higher than 0.1 mg/g, based on dry matter.

4. Method according to claim 3 wherein the treatment is performed with an enzyme capable of reducing the amount of free asparagine in the final product under conditions of pH, temperature and reaction time sufficient for the enzyme to react with free asparagine.

5. Method according to claim 4 wherein the treatment with the enzyme is performed by using an enzyme capable of modifying the side chain of free asparagine, preferably with an enzyme capable of hydrolysing the amide group in the side chain of free asparagine, more preferably with the enzyme asparaginase (EC 3.5.1.1).

6. Method according to any one of claims 3 to 5, wherein the starting yeast extract or the starting autolysed yeast is an intermediate product obtained in a step of a method for the production of a yeast extract or of an autolysed yeast from yeast cells, preferably during treating, more preferably after treating, the yeast cells in order to release and optionally at least partially degrade the cell contents,

7. Use of the yeast extract of claim 1 or of a yeast extract obtainable by a method according to any one of claims 3 to 6 in food, feed or in food or feed ingredients or in the preparation thereof, preferably in the preparation of a process flavour.

8. Use of the autolysed yeast of claim 2 or of an autolysed yeast obtainable by a method according to any one of claims 3 to 6 in food, feed or in food or feed ingredients or in the preparation thereof, preferably in the preparation of a process flavour.

9. Process flavour with an amount of acrylamide suitable for use in flavouring of food products or food ingredients, based on product dry matter, which is not higher than 800 ppb, preferably not higher than 600 ppb, more preferably not higher than 400 ppb, most preferably not higher than 200 ppb.

10. Method to produce the process flavour of claim 9 comprising subjecting a mixture containing a source of amino acids selected from the yeast extract of claim 1 or the autolysed yeast of claim 2, or a mixture thereof, and at least a reducing carbohydrate, to heating under conditions of pH, temperature, pressure and reaction time sufficient for a flavour to develop.

11. Method according to claim 10, wherein the ingredients of the mixture are introduced into an extruder, the mixture is kneaded and heated under conditions of pH, temperature, pressure and reaction time sufficient for a flavour to develop and the resulting process flavour is subsequently extruded from the extruder.

12. Method according to any one of claims 10-11, wherein the conditions of pH, temperature, pressure and/or reaction time are adjusted to reduce the amount of acrylamide in the reaction flavour, preferably wherein the process flavour is dried under reduced pressure.

13. Method according to any one of claims 10-12 wherein the reaction flavour is further treated with an enzyme capable of modifying or degrading acrylamide, preferably with an amidase.

14. Use of the process flavour of claim 9 or obtainable by a process according to any one of claims 10-13 in the flavouring of food or feed or food or feed ingredients.

## Patentansprüche

1. Hefeextrakt mit einer Menge an freiem Asparagin, die höchstens 1 mg/g, vorzugsweise höchstens 0,2 mg/g, besonders bevorzugt höchstens 0,1 mg/g beträgt, bezogen auf die Trockensubstanz.

2. Autolysierte Hefe mit einer Menge an freiem Asparagin, die höchstens 1 mg/g, vorzugsweise höchstens 0,2 mg/g, besonders bevorzugt höchstens 0,1 mg/g beträgt, bezogen auf die Trockensubstanz.

3. Verfahren zur Herstellung des Hefeextrakts nach Anspruch 1 oder der autolysierten Hefe nach Anspruch 2, welches das Behandeln eines Ausgangshefeextrakts oder einer autolysierten Ausgangshefe, welche freies Asparagin enthalten, mit einem Enzym umfasst, mittels eines physikalischen Verfahrens, welches das freie Asparagin teilweise oder vollständig aus dem Ausgangsprodukt entfernt, mittels eines chemischen Verfahrens, welches das freie Asparagin zu einer Form modifiziert und/oder abbaut, die nicht zur Bildung von Acrylamid führen kann, oder mittels einer Kombination davon, welche dazu fähig ist, die Menge an freiem Asparagin in dem Hefeextrakt oder der autolysierten Hefe derart zu verringern, dass in dem Hefeextrakt bzw. der autolysierten Hefe eine Menge an freiem Asparagin erzielt wird, die höchstens 1 mg/g, besonders bevorzugt höchstens 0,2 mg/g, am meisten bevorzugt höchstens 0,1 mg/g beträgt, bezogen auf die Trockensubstanz.

4. Verfahren gemäß Anspruch 3, wobei die Behandlung mit einem Enzym durchgeführt wird, das dazu fähig ist, die Menge an freiem Asparagin im Endprodukt unter Bedingungen des pH-Werts, der Temperatur und der Reaktionszeit zu verringern, die dafür ausreichen, dass das Enzym mit dem freien Asparagin reagiert.

5. Verfahren nach Anspruch 4, wobei die Behandlung mit dem Enzym durchgeführt wird, indem ein Enzym verwendet wird, das dazu fähig ist, die Seitenkette von freiem Asparagin zu modifizieren, vorzugsweise mit einem Enzym, das dazu fähig ist, die Amidgruppe in der Seitenkette des freien Asparagins zu hydrolysieren, besonders bevorzugt mit dem Enzym Asparaginase (EC 3.5.1.1).

6. Verfahren gemäß einem der Ansprüche 3 bis 5, wobei es sich bei dem Ausgangshefeextrakt bzw. der autolysierten Ausgangshefe um ein Zwischenprodukt handelt, das in einem Schritt eines Verfahrens zur Herstellung eines Hefeextrakts oder einer autolysierten Hefe aus Hefezellen erhalten wurde, vorzugsweise während der Behandlung der Hefezellen, besonders bevorzugt nach deren Behandlung, um den Zellinhalt freizusetzen und möglicherweise zumindest teilweise abzubauen.

7. Verwendung des Hefeextrakts nach Anspruch 1 oder eines Hefeextrakts, der mittels eines Verfahrens gemäß einem der Ansprüche 3 bis 6 erhalten werden kann, in Lebensmitteln, Futtermitteln oder in Lebensmittel- oder Futtermittelzutaten oder bei deren Herstellung, vorzugsweise bei der Herstellung eines Reaktionsaromas.

8. Verwendung der autolysierten Hefe nach Anspruch 2 oder einer autolysierten Hefe, die mittels eines Verfahrens gemäß einem der Ansprüche 3 bis 6 erhalten werden kann, in Lebensmitteln, Futtermitteln oder in Lebensmittel- oder Futtermittelzutaten oder bei deren Herstellung, vorzugsweise bei der Herstellung eines Reaktionsaromas.

9. Reaktionsaroma mit einer Menge an Acrylamid, geeignet zur Verwendung beim Aromatisieren von Lebensmittelprodukten oder Lebensmittelzutaten, wobei diese höchstens 800 ppb, vorzugsweise höchstens 600 ppb, besonders bevorzugt höchstens 400 ppb, am meisten bevorzugt höchstens 200 ppb beträgt, bezogen auf die Trockensubstanz.

10. Verfahren zur Herstellung des Reaktionsaromas nach Anspruch 9, im Rahmen dessen eine Mischung, die eine Aminosäurequelle, welche aus dem Hefeextrakt nach Anspruch 1 oder der autolysierten Hefe nach Anspruch 2 oder einer Mischung davon ausgewählt ist, sowie mindestens ein reduzierendes Kohlenhydrat enthält, einer Erhitzung unterzogen wird, wobei die Bedingungen des pH-Werts, der Temperatur, des Drucks und der Reaktionszeit dafür ausreichen, dass sich ein Aroma entwickelt.

11. Verfahren gemäß Anspruch 10, wobei die Bestandteile der Mischung in einen Extruder gegeben werden, die Mischung unter Bedingungen des pH-Werts, der Temperatur, des Drucks und der Reaktionszeit geknetet und erhitzt wird, die dafür ausreichen, dass sich ein Aroma entwickelt, und das erhaltene Reaktionsaroma anschließend aus dem Extruder extrudiert wird.

12. Verfahren gemäß einem der Ansprüche 10-11, wobei die Bedingungen des pH-Werts, der Temperatur, des Drucks und/oder der Reaktionszeit derart eingestellt werden, dass sich die Menge an Acrylamid in dem Reaktionsaroma verringert, wobei das Reaktionsaroma vorzugsweise unter vermindertem Druck getrocknet wird.

13. Verfahren gemäß einem der Ansprüche 10-12, wobei das Reaktionsaroma weiterhin mit einem Enzym behandelt wird, das dazu befähigt ist, Acrylamid zu modifizieren oder abzubauen, vorzugsweise mit einer Amidase.

14. Verwendung des Reaktionsaromas nach Anspruch 9, oder welches mittels eines Verfahrens gemäß einem der Ansprüche 10-13 erhalten werden kann, beim Aromatisieren von Lebensmitteln oder Futtermitteln oder Lebensmittel- oder Futtermittelzutaten.

## Revendications

1. Extrait de levure ayant une quantité d'asparagine libre, sur une base de matière sèche, qui n'est pas supérieure à 1 mg/g, préférablement pas supérieure à 0,2 mg/g, plus préférablement pas supérieure à 0,1 mg/g.

2. Levure autolysée ayant une quantité d'asparagine libre, sur une base de matière sèche, qui n'est pas supérieure à 1 mg/g, préférablement pas supérieure à 0,2 mg/g, plus préférablement pas supérieure à 0,1 mg/g.

3. Méthode de production de l'extrait de levure selon la revendication 1, ou de la levure autolysée selon la revendication 2, comprenant le traitement d'un extrait de levure de départ ou d'une levure autolysée de départ contenant de l'asparagine libre, par une enzyme, par une méthode physique qui élimine une partie ou la totalité de l'asparagine libre du produit de départ, par une méthode chimique qui modifie et/ou dégrade l'asparagine libre en une forme qui ne peut pas conduire à la formation d'acrylamide, ou par une combinaison de celles-ci capable de réduire la quantité d'asparagine libre dans l'extrait de levure ou la levure autolysée, afin d'obtenir une quantité d'asparagine libre dans l'extrait de levure ou la levure autolysée qui n'est pas supérieure à 1 mg/g, plus préférablement pas supérieure à 0,2 mg/g, tout préférablement pas supérieure à 0,1 mg/g, sur une base de matière sèche.

4. Méthode selon la revendication 3, dans laquelle le traitement est effectué par une enzyme capable de réduire la quantité d'asparagine libre dans le produit final dans des conditions de pH, de température et de temps de réaction suffisantes pour que l'enzyme réagisse avec l'asparagine libre.

5. Méthode selon la revendication 4, dans laquelle le traitement par l'enzyme est effectué en utilisant une enzyme capable de modifier la chaîne latérale de l'asparagine libre, préférablement par une enzyme capable d'hydrolyser le groupement amide dans la chaîne latérale de l'asparagine libre, plus préférablement par l'enzyme de type asparaginase (EC 3.5.1.1).

6. Méthode selon l'une quelconque des revendications 3 à 5, dans laquelle l'extrait de levure de départ ou la levure autolysée de départ est un produit intermédiaire obtenu dans une étape d'une méthode destinée à la production d'un extrait de levure ou d'une levure autolysée à partir de cellules de levure, préférablement lors du traitement, plus préférablement après le traitement, des cellules de levure afin de libérer et éventuellement au moins partiellement dégrader le contenu des cellules.

7. Utilisation de l'extrait de levure selon la revendication 1 ou d'un extrait de levure pouvant être obtenu par une méthode selon l'une quelconque des revendications 3 à 6, dans des aliments pour l'alimentation humaine ou animale, ou dans des ingrédients pour l'alimentation humaine ou animale ou dans la préparation de ceux-ci, préférablement dans la préparation d'un arôme de synthèse.

8. Utilisation de la levure autolysée selon la revendication 2 ou d'une levure autolysée pouvant être obtenue par une méthode selon l'une quelconque des revendications 3 à 6, dans des aliments pour l'alimentation humaine ou animale, ou dans des ingrédients pour l'alimentation humaine ou animale ou dans la préparation de ceux-ci, préférablement dans la préparation d'un arôme de synthèse.

9. Arôme de synthèse ayant une quantité d'acrylamide convenable pour une utilisation dans l'aromatisation de produits alimentaires ou d'ingrédients alimentaires, sur une base de matière sèche de produit, qui n'est pas supérieure à 800 ppb, préférablement pas supérieure à 600 ppb, plus préférablement pas supérieure à 400 ppb, tout préférablement pas supérieure à 200 ppb.

10. Méthode destinée à produire l'arôme de synthèse selon la revendication 9, comprenant la soumission d'un mélange contenant une source d'acides aminés choisie parmi l'extrait de levure selon la revendication 1, ou la levure autolysée selon la revendication 2, ou un mélange de ceux-ci, et au moins un glucide réducteur, à un chauffage dans des conditions de pH, de température, de pression et de temps de réaction suffisantes pour le développement d'un arôme.

11. Méthode selon la revendication 10, dans laquelle les ingrédients du mélange sont introduits dans une extrudeuse, le mélange est malaxé et chauffé dans des conditions de pH, de température, de pression et de temps de réaction suffisantes pour le développement d'un arôme et l'arôme de synthèse résultant est ensuite extrudé à partir de l'extrudeuse.

12. Méthode selon l'une quelconque des revendications 10-11, dans laquelle les conditions de pH, de température, de pression et/ou de temps de réaction sont ajustées afin de réduire la quantité d'acrylamide dans l'arôme de réaction, préférablement où l'arôme de synthèse est séché sous pression réduite.

13. Méthode selon l'une quelconque des revendications 10-12, dans laquelle l'arôme de réaction est en outre traité par une enzyme capable de modifier ou de dégrader l'acrylamide, préférablement par une amidase.

14. Utilisation de l'arôme de synthèse selon la revendication 9 ou pouvant être obtenu par un procédé selon l'une quelconque des revendications 10-13, dans l'aromatisation d'aliments pour l'alimentation humaine ou animale, ou dans des ingrédients pour l'alimentation humaine ou animale.
